# EUROPÄISCHE PATENTSCHRIFT

(11) **EP 2 638 998 B1**
(45) Veröffentlichungstag und Bekanntmachung des Hinweises auf die Patenterteilung: **29.07.2015**
(21) Anmeldenummer: 13159326.1
(22) Anmeldetag: 15.03.2013
(51) Int. Cl.: B23D 47/12, B27B 5/24, B23D 47/02

(54) **Tischkreissäge**
Circular saw bench
Scie circulaire à table

(30) Priorität: 16.03.2012 DE 202012100940 U
(43) Veröffentlichungstag der Anmeldung: 18.09.2013
(73) Patentinhaber: Otto Martin Maschinenbau GmbH & Co. KG, 87724 Ottobeuren (DE)
(72) Erfinder: Klormann, Andreas, 87724 Ottobeuren (DE)
(74) Vertreter: Ernicke, Klaus Stefan

(56) Entgegenhaltungen:
- EP-A1- 2 366 482
- GB-A- 564 641
- US-A- 2 062 969
- US-A- 2 523 680
- US-A1- 2009 007 743

## Beschreibung

Die Erfindung betrifft eine Tischkreissäge, insbesondere eine Formatkreissäge.

Aus der Praxis sind Formatkreissägen bekannt, die einen Maschinentisch mit einem Sägeaggregat und einem Untergestell mit umlaufender geschlossener Wandung aufweisen. Das Sägeaggregat besitzt ein wechselbares Sägeblatt, dessen Welle über ein Übersetzungsgetriebe mit einem Antriebsmotor in variabler Übersetzung gekoppelt ist. Wenn bei einem Sägeblattwechsel die Übersetzungsstufe zur Anpassung an einen anderen Blattdurchmesser geändert werden soll, musste durch die Wandung ein Zugang von hinten oder von der Seite zum Übersetzungsgetriebe bei Einnahme einer Wartungsstellung geschaffen werden. Dies brachte Ergonomie- und Sicherheitsprobleme mit sich.

Es ist Aufgabe der vorliegenden Erfindung, eine verbesserte Tischkreissäge, insbesondere Formatkreissäge, aufzuzeigen.

Die Erfindung löst diese Aufgabe mit den Merkmalen im Hauptanspruch.

Die beanspruchte Sägenausbildung hat den Vorteil, dass das Sägeblatt und das Übersetzungsgetriebe in der Wartungsstellung von der gleichen Seite her zugänglich sind, was eine Änderung der Übersetzungsstufe wesentlich erleichtert und dabei die Ergonomie und die Sicherheit verbessert. Das mit geringem Abstand hinter dem Sägeblatt liegende Übersetzungsgetriebe ist dabei auch gut und leicht erreichbar sowie einsehbar. Der Wechselvorgang wird vereinfacht und beschleunigt und die Unfall- sowie Verletzungsgefahr gemindert. Ein Sägeblattwechsel mit Übersetzungsänderung kann schnell, effektiv und wirtschaftlich durchgeführt werden.

Der konstruktive oder bautechnische Aufwand für einen solchen Sägeblatt- und Übersetzungswechsel ist gering und die Wertschöpfung dadurch besonders hoch.

Ein weiterer Vorteil ist die verbesserte Sicherheitssituation bei einem solchen Sägeblatt- und Übersetzungswechsel. Das Sägeblatt kann zumindest bereichsweise in einem versenkten Wartungsbereich angeordnet sein, der durch eine Komponente des Maschinentischs, insbesondere einen Schiebetisch und ggf. die bewegliche Frontabdeckung eines Schutzkastens für das Sägeblatt, versperrbar oder verschließbar ist. Dies mindert den Sicherheitsaufwand. Für den Sägeblatt- und Übersetzungswechsel kann dann auf ohnehin vorhandene Sicherheitseinrichtungen, z.B. Kontrollschalter, Sensoren oder dgl. zurückgegriffen werden. Insbesondere der Schiebetisch und die bewegliche Frontabdeckung können eine Sicherheitseinrichtung aufweisen.

Die seitliche Wandung des Untergestells kann geschlossen bleiben. Die Einbringung zusätzlicher sicherheitskritischer Öffnungen in der Gestellwandung ist entbehrlich. Mit Schließen der Frontabdeckung und Rückbewegung der Maschinentischkomponente in die Betriebsstellung ist der Zugang zum Wartungsbereich und zum Übersetzungsgetriebe automatisch versperrt bzw. geschlossen. Der Wartungsbereich ist bevorzugt schachtartig ausgebildet. Er kann den Schutzkasten nebst Späneschacht und Spanabsaugung einbeziehen.

Für die Einnahme und Kontrolle der Wartungsstellung mit Näherungslage der Getriebeteile, insbesondere der Treibscheibanordnungen, ergeben sich ebenfalls Verbesserungen. Die Erfindung ermöglicht das Auskommen mit einer einzigen Stelleinrichtung, die z.B. der Sägewelle zugeordnet ist und die ohnehin für die Höhenverstellung des Kreissägeblattes vorhanden sein kann. Ein ggf. frei beweglich gelagerter Antriebsmotor kann über einen Riemen oder ein anderes Treibmittel des Übersetzungsgetriebes bei der Stellbewegung, insbesondere einer Hubbewegung für die Rückkehr in die Betriebsstellung mitgenommen werden. Bevorzugt ist die Stelleinrichtung als steuerbarer Stellantrieb, insbesondere Hubantrieb, ausgebildet.

Für die Bewegung in die bevorzugt abgesenkte Wartungsstellung kann der Weg eines solchen Antriebsmotors durch eine Arretierung begrenzt und die Motorposition nebst Näherungslage der Treibscheibenanordnungen definiert werden. Die Arretierung kann manuell oder automatisch betätigbar sein. Sie ist bevorzugt durch eine besagte Wändöffnung zugänglich und kann in Eingriff gebracht werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische Ansicht einer Tischkreissäge mit einem geöffneten Wartungsbereich und einem abgenommenen Kreissägeblatt,
- Figur 2:: eine vergrößerte Darstellung des in Figur 1 gezeigten Wartungsbereichs und eines Übersetzungsgetriebes in Wartungsstellung,
- Figur 3 und 4:: Frontansichten in das Untergestell vor und hinter einer innenliegenden Gestellwand,
- Figur 5:: eine perspektivische Ansicht des geöffneten Wartungsbereichs und der Gestellwand in Betriebsstellung,
- Figur 6:: die Anordnung von Figur 5 in Wartungsstellung mit Zugang zum Übersetzungsgetriebe,
- Figur 7:: eine perspektivische Ansicht eines Schutzkastens der Tischkreissäge mit geöffnetem Deckel und
- Figur 8:: den Schutzkasten in Seitenansicht mit geöffneter und geschlossener Deckelstellung.

Die Erfindung betrifft eine Tischkreissäge (1). Diese kann vorzugsweise als Formatkreissäge ausgebildet sein.

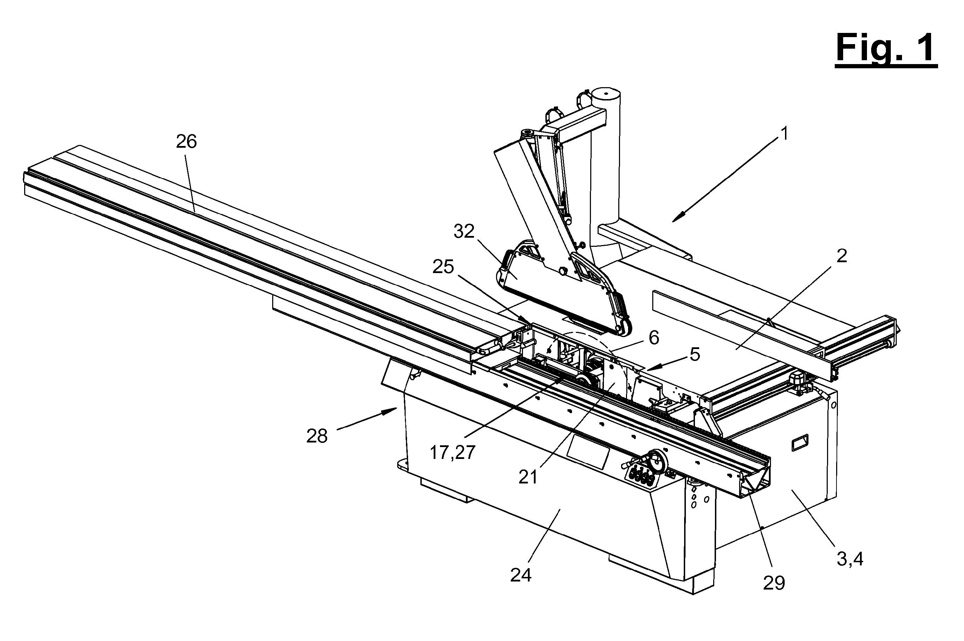

Figur 1 zeigt ein Ausführungsbeispiel in Form einer Formatkreissäge (1). Diese besitzt einen Maschinentisch (2) mit einem Untergestell (3), welches eine seitlich umlaufende und geschlossene Wandung (4) aufweist. An der vorderen Bedienseite (28) kann die Tischkreissäge (1) einen Vorbau (24) mit ebenfalls geschlossener seitlicher Wandung aufweisen. Der stationäre Teil des Maschinentischs (2) kann durch einen Schiebetisch (26) ergänzt werden, der auf einer Führung (29) auf dem Untergestell (3) oder dem Vorbau (24) beweglich gelagert ist und der ggf. einen steuerbaren Zustellantrieb aufweist. Über dem Maschinentisch (2) können weitere Sägenkomponenten, z.B. eine Schutzhaube (32), ein Spaltkeil, Anschläge oder dergleichen, angeordnet sein. Die Tischkreissäge (1) kann ferner eine Steuerung und eine Bedieneinrichtung (nicht dargestellt) mit einer optischen Anzeige und Eingabemitteln, z.B. in Form eines Touchscreen, aufweisen.

Die Tischkreissäge (1) besitzt ein Sägeaggregat (5), das zumindest ein Sägeblatt (6) aufweist, welches z.B. eine kreisrunde Form hat und auf einer Sägewelle (7) mittels einer flanschartigen Blattaufnahme (8) lösbar und wechselbar befestigt ist. Die Sägewelle (7) ist mit einem bevorzugt elektrischen Antriebsmotor (9) unter Zwischenschaltung eines Übersetzungsgetriebes (10) gekoppelt, welches mehrere wählbare und unterschiedliche Übersetzungsstufen (11) aufweist. Hierüber kann die Übersetzung an unterschiedliche Sägeblattdurchmesser angepasst werden. Das Sägeaggregat (5) kann weitere Komponenten beinhalten, z.B. einen Vorritzer, eine Sägekonsole, eine Spanabsaugung, einen unteren Schutzkasten (34) für das Kreissägeblatt (6) oder dgl..

Das Sägeaggregat (5) ist zum größten Teil versenkt im Untergestell (3) und unter dem Maschinentisch (2) angeordnet, wobei das Kreissägeblatt (6) durch eine schlitzartige Tischöffnung (25) ragt, die starr oder variabel ausgebildet sein kann. Das Sägeaggregat (5) kann um die Zuführachse schwenkbar gelagert sein, wobei die Tischöffnung (25) eine entsprechend variable Ausbildung hat. Die Tischöffnung (25) kann als Ausschnitt am Rand des stationären Teils des Maschinentisches (2) ausgebildet sein und wird an der zur Bedienseite (28) weisenden Vorderseite durch den Schiebetisch (26) begrenzt. Durch die Tischöffnung (25) ragt das Kreissägeblatt (6).

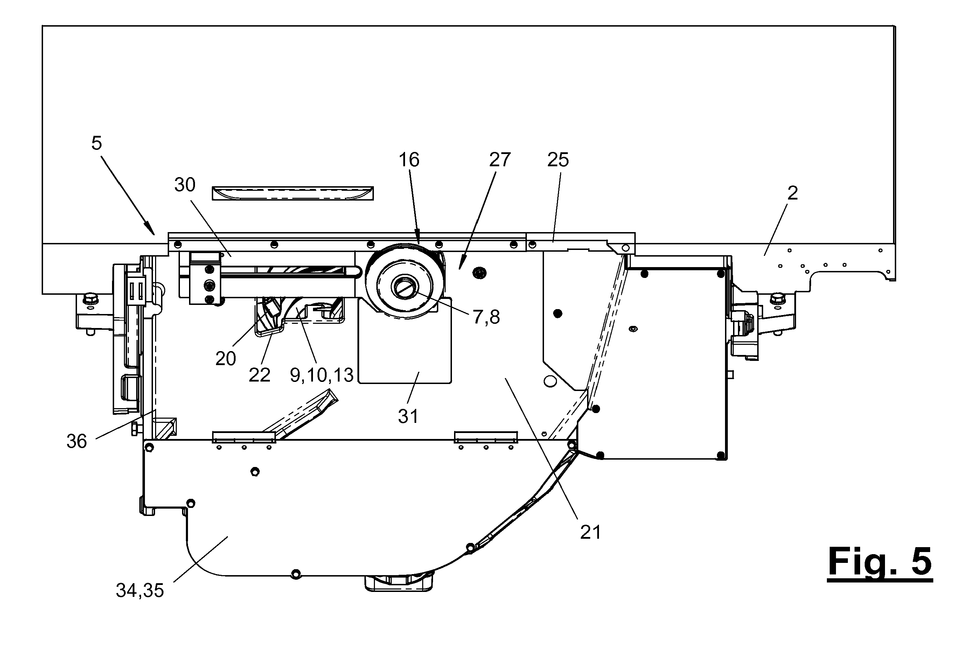

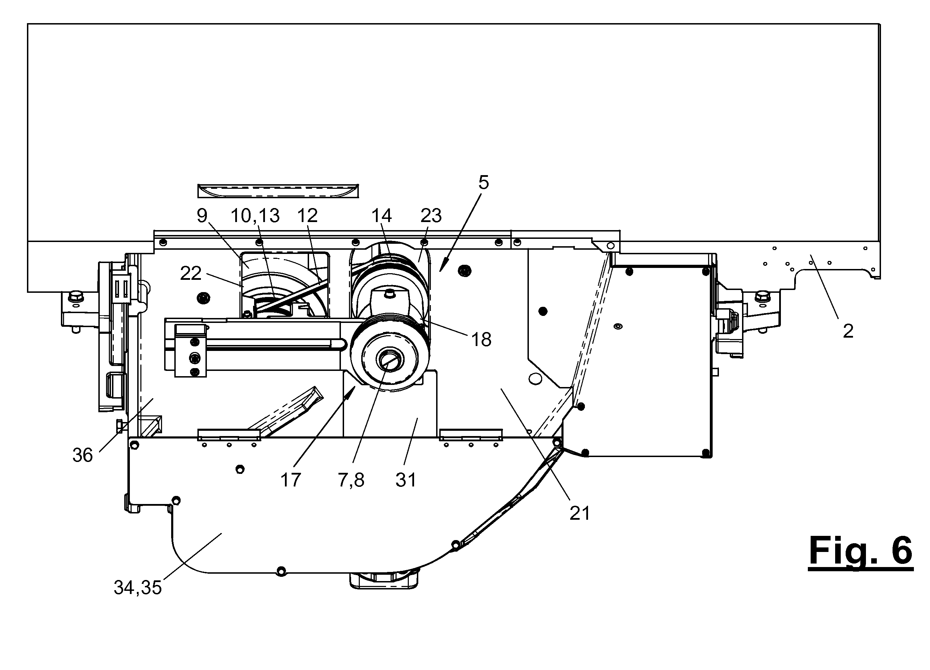

Der Antriebsmotor (9), die Sägewelle (7) und das Übersetzungsgetriebe (10) befinden sich im Untergestell (3) und unter dem Maschinentisch (2). Sie können zwischen einer oberen Betriebsstellung (16), die z.B. in Figur 5 dargestellt ist, und einer unteren Wartungsstellung (17) gemäß Figur 6 hin- und herbewegt werden. In der unteren Wartungsstellung (17), die auch als Wechselstellung oder Änderungsstellung bezeichnet wird, kann die Übersetzungsstufe (11) geändert bzw. gewechselt werden.

Das Übersetzungsgetriebe (10) kann in unterschiedlicher Weise ausgebildet sein. Im gezeigten Ausführungsbeispiel ist es als Umlaufgetriebe, insbesondere als Riemengetriebe ausgebildet. Das Getriebe (10) weist an der Welle des Antriebsmotors (9) und an der Sägewelle (7) rotierende Treibscheibenanordnungen (13,14) in Verbindung mit einem umlaufenden Treibmittel (12) auf. Die Treibscheibenanordnung (13) ist an der Motorwelle und die Treibscheibenanordnung (14) an der Sägewelle (7) angeordnet. Die gepaarten Treibscheibenanordnungen (13,14) bilden durch ihre Ausgestaltung unterschiedliche Übersetzungsstufen (11). In der gezeigten Variante bestehen die Treibscheibenanordnungen (13,14) jeweils aus mehreren, z.B. jeweils drei Riemenscheiben mit unterschiedlichen Durchmessern. Durch die Scheibenpaarungen und das jeweils aufgelegte Treibmittel (12) werden unterschiedliche Übersetzungsstufen (11) gebildet.

Das Treibmittel (12) ist biegeelastisch sowie zugfest und hat eine geschlossene Ringform. Es ist bevorzugt als Riemen ausgebildet. In der gezeigten Ausführungsform kommt ein Keilriemen oder Keilrippenriemen zum Einsatz, wobei die Treibscheiben oder Riemenscheiben eine entsprechende nutenförmige Scheibenkontur (15) mit einer ebenen oder ggf. profilierten bzw. gerillten Traktionsfläche und seitlichen Randflanschen aufweisen.

In der Betriebsstellung (16) ist der Riemen (12) gespannt. In der Wartungs- oder Änderungsstellung (17) sind die Treibscheibenanordnungen (13,14) derart aneinander angenähert, dass der Riemen (12) schlaff wird und in dieser Näherungslage von einer Scheibenpaarung auf eine andere zum Übersetzungswechsel umgehängt werden kann.

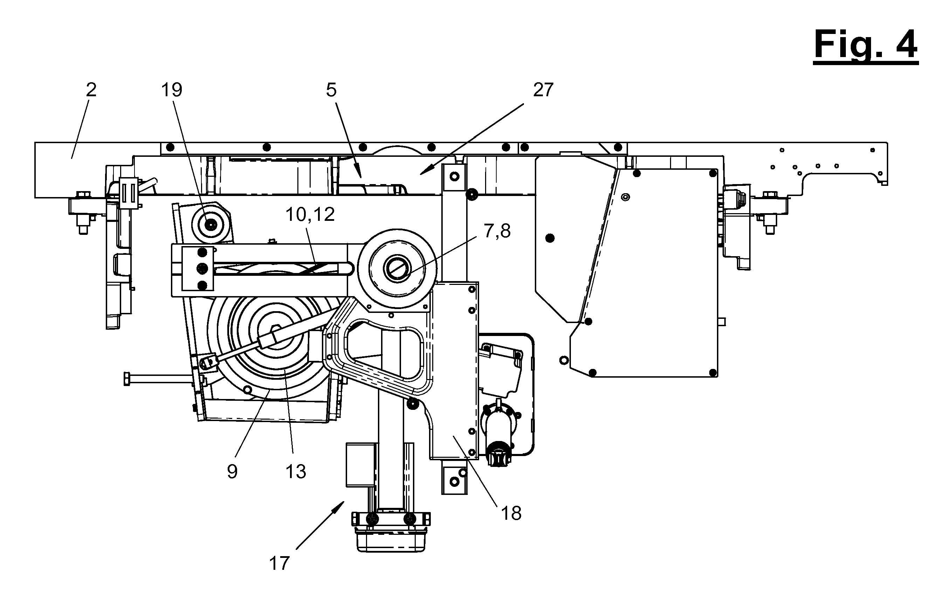

Die Sägewelle (7) und der Antriebsmotor (9) sind beweglich und verstellbar, insbesondere heb- und senkbar gelagert. Eine Stelleinrichtung (18) ist in der gezeigten Ausführungsform gemäß Figur 4 der Sägewelle (7) und dem daran befestigbaren Kreissägeblatt (6) zugeordnet und erlaubt deren z.B. vertikale Höhenverstellung. Die Stelleinrichtung (18) kann manuell betätigt werden, z.B. durch eine Handkurbel. Sie kann alternativ einen steuerbaren Antrieb, insbesondere einen elektrischen Hubantrieb, besitzen. Die Stelleinrichtung (18) kann mit dem Lagergehäuse der Sägewelle (7) und der Treibscheibenanordnung (14) verbunden sein und diese gemeinsam bewegen sowie führen.

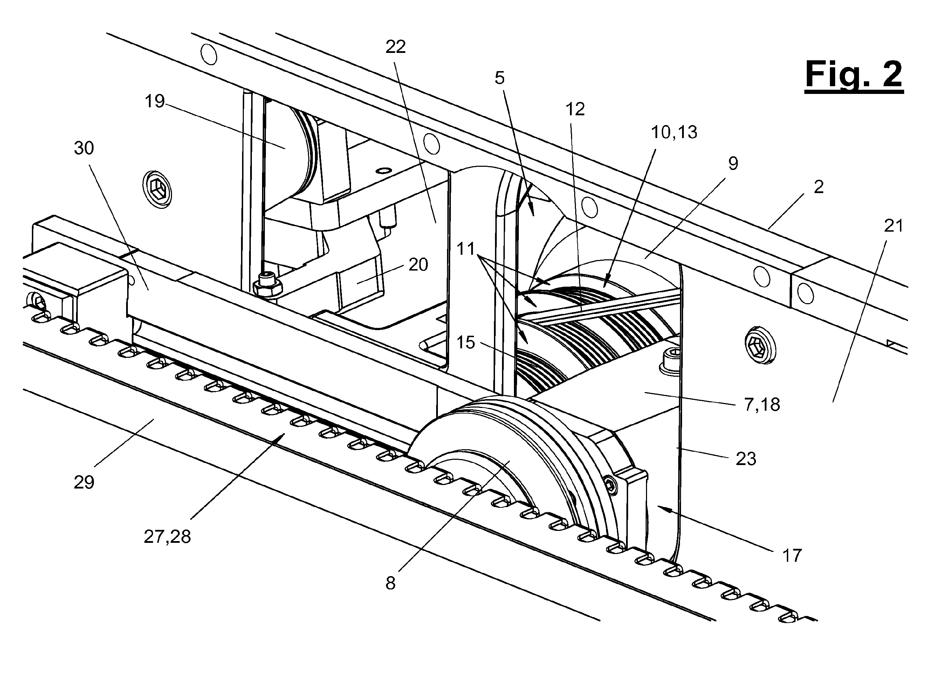

Der Antriebsmotor (9) kann frei beweglich gelagert sein, z.B. durch eine in Figur 2 und 4 dargestellte Antriebslagerung, z.B. Schwenklagerung (19). Er ist über das Übersetzungsgetriebe (10), insbesondere das umlaufende Treibmittel (12) mit der verstellbaren Sägewelle (7) gekoppelt und wird bei deren Verstellung, insbesondere Hubverstellung, mitgenommen. Ansonsten neigt der Antriebsmotor (9) durch die freie Lagerung und sein Eigengewicht zu einer Abwärtsbewegung und spannt dabei das Treibmittel (12), insbesondere den Riemen. Eine Feder, insbesondere Gasfeder, kann unterstützend wirken. Die Betriebsstellung (16) wird in der gezeigten Ausführungsform durch die Stelleinrichtung (18) für das Kreissägeblatt (6) definiert und eingestellt, wobei der Antriebsmotor (9) entsprechend mitgenommen und durch Eigengewicht bzw. Federkraft positioniert wird.

Wie Figur 1 und die zugehörige Ausschnittsvergrößerung von Figur 2 zeigen, befinden sich der Antriebsmotor (9) und das Übersetzungsgetriebe (10) nebst der zugehörigen Lagerungen und der Stelleinrichtung (18) von der Bedien- oder Zugangsseite (28) aus gesehen hinter einer aufrechten, insbesondere vertikalen Wand (21). Die Wand (21) ist von der Außenwandung (4) zurückversetzt im Innenraum des Untergestells (3) angeordnet.

Diese Wand (21) kann in der gezeigten Ausführungsform die Rückwand einer Sägekonsole (33) sein, die starr oder schwenkbar z.B. am Untergestell (3) oder am Maschinentisch (2) gelagert ist. Die Stelleinrichtung (18) kann ggf. mit der Sägekonsole (33) verbunden sein. In einer anderen Ausführungsform kann die innere Wand (21) von einer stationären Gestellwand des Untergestells (3) gebildet werden.

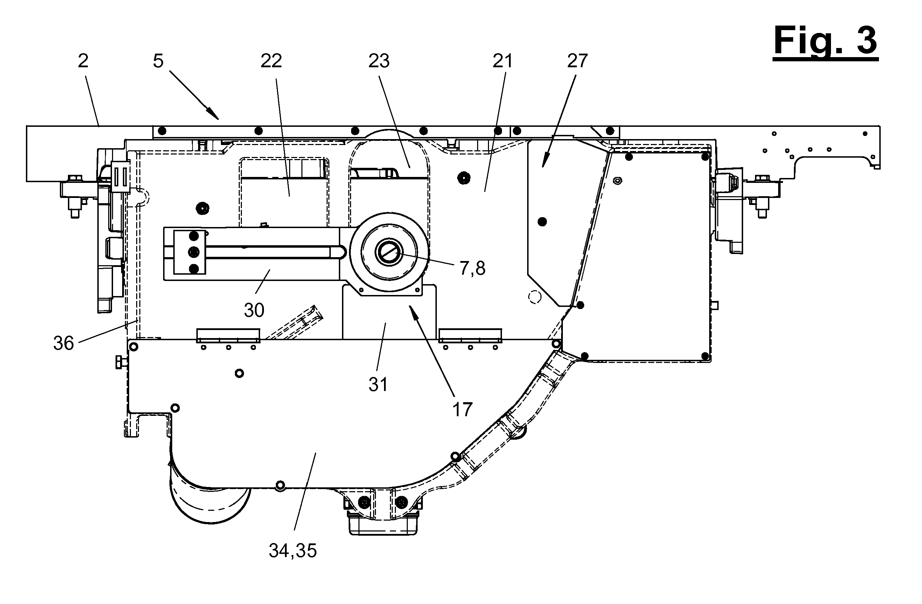

Die Sägewelle (7) ragt durch die Wand (21), wobei der am zugangseitigen Wellenende angeordnete Flansch (8) sich vor der Wand (21) befindet. Wie Figur 3, 5 und 6 verdeutlichen, können an dem zugangseitigen Ende der Sägewelle (7) und vor der Wand (21) auch eine abwärts gerichtete vertikale Schürze (31) und eine im wesentlichen horizontale Spaltkeilführung (30) angeordnet sein, die mit der Wellenlagerung sowie der Stelleinrichtung (18) verbunden sind und mitbewegt werden.

Figur 1 bis 3, 5 und 6 verdeutlichen die Ausbildung der Wand (21), welche zumindest eine Wandöffnung (22,23) aufweist, durch die einerseits die Sägewelle (7) ragt und die andererseits eine Zugangsöffnung für das in der abgesenkten Wartungsstellung (17) befindliche Übersetzungsgetriebe (10) bildet. Im gezeigten Ausführungsbeispiel sind zwei Wandöffnungen (22,23) vorhanden, die seitlich nebeneinander angeordnet und durch einen aufrechten Wandsteg getrennt sind. Die Wandöffnung(en) (22,23) ist/sind an die Zugangserfordernisse für eine Änderung der Übersetzungsstufen (11) adaptiert und haben eine entsprechende Lage und Größe sowie ggf. auch Form. Ein Bediener kann zur Übersetzungsänderung durch die Wandöffnung(en) (22,23) greifen und das Übersetzungsgetriebe (10) bzw. die Treibscheibenanordnungen (13,14) zur Übersetzungsänderung, insbesondere zum Umhängen des schlaffen Treibmittels (12) erreichen. Die Wandöffnung(en) (22,23) ist/sind auch groß genug, um Blickkontakt zum Übersetzungsgetriebe (10) bei der Übersetzungsänderung und eine Ergebniskontrolle zu ermöglichen. Andererseits ist die Größe und Anordnung der Wandöffnung(en) (22,23) so getroffen, dass eine ggf. tragende Funktion der Wand (21) nicht beeinträchtigt wird.

Die Sägewelle (7) ragt durch die eine, z.B. in den Zeichnungen rechte, Wandöffnung (23), die eine längliche und im wesentlichen vertikal ausgerichtete Form hat und auch die Verstellbewegungen, insbesondere Hub- und Senkbewegungen, der Sägewelle (7) ermöglicht. Die unter der Sägewelle (7) angebrachte Schürze (31) deckt in der angehobenen Betriebsstellung (16) gemäß Figur 5 den unteren Öffnungsbereich schützend ab.

Um in der Wartungsstellung (17) eine für Übersetzungsänderungen geeignete Getriebelage, z.B. eine Näherungslage der Treibscheibenanordnungen (13,14), zu ermöglichen, kann beim Absenken der Weg des Antriebsmotors (9) begrenzt werden. Hierfür kann eine mit dem Antriebsmotor (9) verbundene Arretierung (20) vorhanden sein, die mit einem stationären Teil des Maschinen- oder Untergestells (3), z.B. mit der einen linken Wandöffnung (22), zusammenwirkt. Die Arretierung (20) kann als Schwenkhebel ausgebildet sein, der durch die besagte Wandöffnung (22) erreichbar ist und der vor dem Absenken der Sägewelle (7) und des Antriebsmotors (9) in die Wartungsstellung (17) betätigt, z.B. ausgeklappt und in die Wandöffnung (22) geschwenkt wird. Er schlägt bei der Abwärtsbewegung des Antriebsmotors (9) am Öffnungsrand an und blockiert die Senkbewegung. Er definiert hierdurch die Position des Antriebsmotors (9) und seiner Welle in der Wartungsstellung (17).

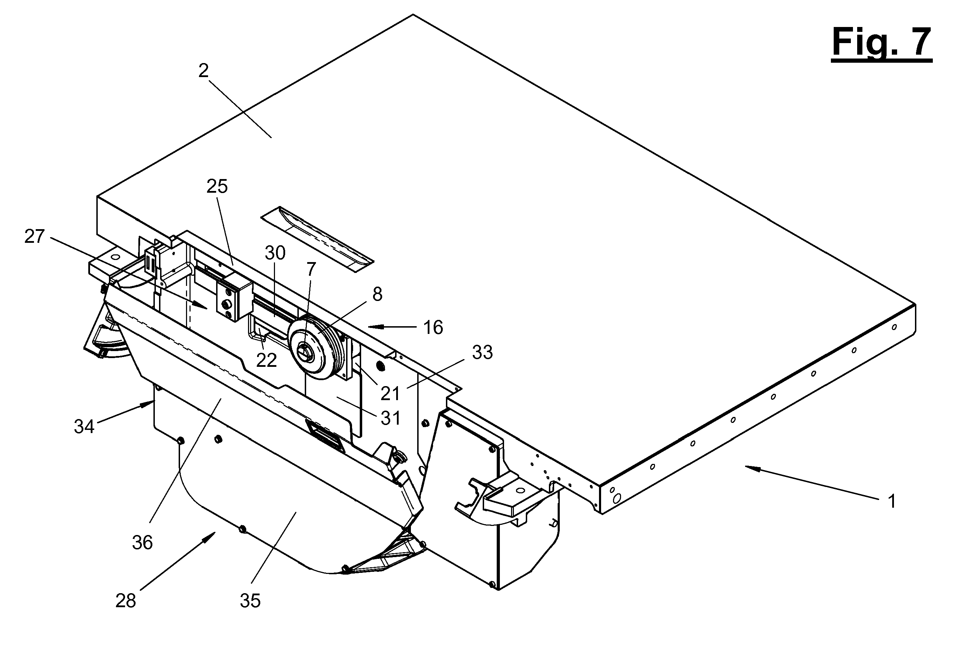

Wie Figur 1 und 7 verdeutlichen, kann sich die Wand (21) im inneren Bereich des Maschinen- oder Untergestells (3) befinden und kann von vorn durch andere Gestellteile, z.B. den Vorbau (24), die Wandung (4), den Schutzkasten (34) oder dgl. verdeckt sein. Der Schiebetisch (26) bietet dann in der gezeigten Rückzugstellung eine Zugangsmöglichkeit zu der/den Wandöffnung(en) (22,23) und dem Übersetzungsgetriebe (10). Ein Zugang ist dadurch von der Zugangsseite (28), die zugleich die Bedienseite ist und schräg von oben möglich.

An oder unter dem Maschinentisch (2) ist ein versenkter und mittels des beweglichen Schiebetischs (26) versperrbarer Wartungsbereich (27) angeordnet, der den unteren und im Maschinentisch (2) versenkten Bereich des Kreissägeblatts (6) umgibt. Dieser Wartungsbereich (27) kann schachtartig ausgebildet sein. Er kann zugleich den Späneschacht bilden und an eine Absaugung angeschlossen sein. Er ist in Öffnungsstellung von der Zugangsseite (28) her zugänglich und hat eine für den Zugriff zum Getriebe (10) geeignete Weite. Der Wartungsbereich (27) kann z.B. von der Sägekonsole (33) mit der rückwärtigen Konsolenwand (21), davon randseitig abstehenden Seitenwänden und einer ggf. abnehmbaren Frontabdeckung (36) gebildet werden. Die Wandöffnung(en)(22,23) mündet oder münden am Wartungsbereich (27).

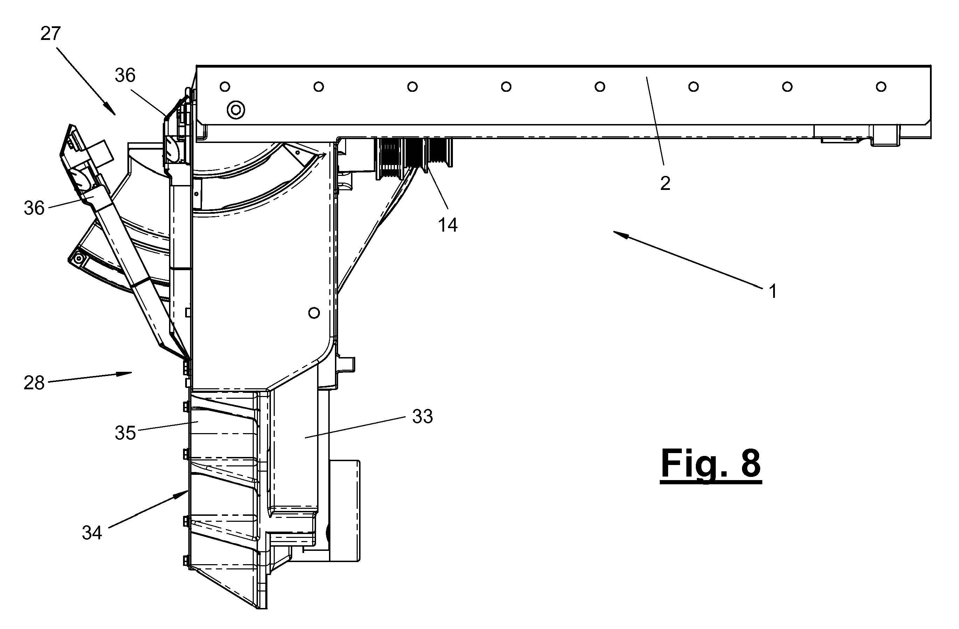

Figur 7 und 8 zeigen den eingangs erwähnten Schutzkasten (34) des Sägeblatts (6), der einen unteren starren und geschlossenen Kastenbereich (35) sowie eine daran beweglich, z.B. gelenkig oder abnehmbar, gelagerte oberen Frontabdeckung (36) aufweist. Der Schutzkasten (34) ist unterhalb des nicht dargestellten Schiebetischs (26) angeordnet. Die z.B. als abgekanteter Deckel ausgebildete Frontabdeckung (36) grenzt in Schließstellung dicht an das Sägeblatt (6) an und kann in dieser Stellung verriegelt und überwacht werden. Die Sägekonsole (33) oder die stationäre Gestellwand kann die Rückwand des Schutzkastens (34) bilden. In Figur 3, 5 und 6 ist der Deckel (36) durchsichtig dargestellt.

Der Wartungsbereich (27) kann am oberen Bereich des Schutzkastens (34) ausgebildet sein und wird durch Entfernen des Schiebetischs (26) sowie anschließendes Öffnen der Frontabdeckung (36) gemäß Figur 7 und 8 zugänglich. Der Schutzkasten (34) kann den Späneschacht bilden und an eine Absaugung angeschlossen sein.

Der Schiebetisch (26) ist mit einer Sicherheitseinrichtung (nicht dargestellt) ausgestattet, welche für die Aufnahme des Sägebetriebs die korrekte und geschlossene Tischstellung detektiert und an die Maschinensteuerung meldet. In dieser Tischposition ist zugleich auch der Wartungsbereich (27) und der hinter der Wand (21) liegende Bereich mit der Sägewelle (7), dem Antriebsmotor (9) und dem Übersetzungsgetriebe (10) versperrt und gesichert. Für die Wartung und die Übersetzungsänderung sind daher keine eigenen zusätzlichen Sicherungsmittel erforderlich.

Ein Sägeblattwechsel und/oder eine Übersetzungsänderung laufen wie folgt ab.

Zunächst wird der Schiebetisch (26) in die Rückzugsposition gebracht und der Wartungsbereich (27) gemäß Figur 1 und 7 geöffnet. Das Sägeblatt (6) wird dann entfernt und gibt die Wandöffnung(en) (22,23) frei. Eventuelle Zusatzkomponenten, wie ein Spaltkeil etc., können ebenfalls abgebaut werden. Anschließend wird die Arretierung (20) aktiviert und dann die Stelleinrichtung (18) betätigt, welche eine Senkbewegung aus der vorherigen Betriebsstellung (16) gemäß Figur 5 in die Wartungsstellung (17) gemäß Figur 6 bewirkt. Die Treibscheibenanordnungen (13,14) nehmen eine Näherungslage ein und sind durch die Wandöffnung(en) (22,23) von der Zugangsseite (28) her erreichbar. Der Bediener kann durch Umhängen des Treibmittels (12) die Übersetzungsstufe ändern. Anschließend wird mit der Stelleinrichtung (18) die Sägewelle (7) wieder unter Mitnahme des dearretierten Antriebsmotors (9) in eine Betriebsstellung (16) gebracht, ein Kreissägeblatt (6) nebst eventueller weiterer Sägekomponenten montiert und schließlich der Wartungsbereich (27) durch den Schiebetisch (26) wieder versperrt sowie bis auf den Tischausschnitt (25) verschlossen. Der Sägebetrieb kann dann fortgesetzt werden.

Abwandlungen der gezeigten und beschriebenen Ausführungsformen sind in verschiedener Weise möglich. Der Antriebsmotor (9) kann in anderer Weise gelagert und bewegbar sein. Er kann eine eigene Stelleinrichtung mit oder ohne Antrieb aufweisen. Die Kinematik und Richtung der Verstellbewegung zwischen der Betriebsstellung (16) und der Wartungsstellung (17) mit Näherungslage kann abgewandelt und als schräge oder horizontale Linearbewegung, als Schwenkbewegung oder in dgl. anderer Weise ausgebildet sein.

Die Wand (21) kann nur eine ggf. größere Wandöffnung aufweisen.

Das Übersetzungsgetriebe (10) und die Änderung einer Übersetzungsstufe kann ebenfalls variieren. Statt Treibscheibenpaarungen mit jeweils mehreren aufgereihten Triebscheiben können einzelne und in sich oder in ihrer Wellenzuordnung verstellbare Treibscheiben eingesetzt werden, bei denen z.B. der wirksame Durchmesser verstellt werden kann oder die Zuordnung zu anderen Treibscheiben zur Paarungsbildung durch Verschieben oder dgl. verändert werden kann. Das Treibmittel kann ein Seil, eine Kette oder dgl. sein.

Ferner kann das Übersetzungsgetriebe (10) in beliebig anderer Weise, z.B. als Zahnradgetriebe, mit manuell betätigbaren und in ihrer Eingriffsstellung veränderbaren Zwischenrädern ausgebildet sein.

Auch die Ausbildung der Tischkreissäge (1) ist variabel. Statt der gezeigten Formatkreissäge kann eine andere Kreissägenausführung gewählt werden. Ein Schiebetisch (26) nebst Vorbau (24) kann ggf. entfallen, wobei die innenliegende Wand (21) auf andere Weise an der Zugangsseite (28) verdeckt ist. Die Zugangsseite (28) muss nicht unbedingt die Bedienseite der Tischkreissäge (1) sein.

### BEZUGSZEICHENLISTE

- 1: Tischkreissäge, Formatkreissäge
- 2: Maschinentisch
- 3: Untergestell
- 4: Wandung
- 5: Sägeaggregat
- 6: Sägeblatt, Kreissägeblatt
- 7: Welle, Sägewelle
- 8: Blattaufnahme, Flansch
- 9: Antriebsmotor
- 10: Getriebe, Übersetzungsgetriebe
- 11: Übersetzungsstufe
- 12: Treibmittel, Riemen
- 13: Treibscheibenanordnung an Motor
- 14: Treibscheibenanordnung an Welle
- 15: Scheibenkontur
- 16: Betriebsstellung
- 17: Wartungsstellung
- 18: Stelleinrichtung, Stellantrieb, Hubantrieb
- 19: Antriebslagerung, Schwenklagerung
- 20: Arretierung, Hebel
- 21: Wand, Konsolenwand, Gestellwand
- 22: Wandöffnung, Zugangsöffnung
- 23: Wandöffnung, Zugangsöffnung
- 24: Vorbau
- 25: Tischöffnung, Tischausschnitt
- 26: Schiebetisch
- 27: Wartungsbereich, Schacht
- 28: Zugangseite, Bedienseite
- 29: Führung Schiebetisch
- 30: Spaltkeilführung
- 31: Schürze
- 32: Schutzhaube
- 33: Sägekonsole
- 34: Schutzkasten
- 35: Kastenbereich starr
- 36: Frontabdeckung beweglich, Deckel

## Patentansprüche

1. Tischkreissäge, insbesondere Formatkreissäge, mit einem Sägeaggregat (5) und einem Maschinentisch (2), welcher ein Untergestell (3) mit einer seitlichen geschlossenen Wandung (4) aufweist,
wobei das Sägeaggregat (5) ein rotierendes, wechselbares Sägeblatt (6), eine Sägewelle (7) nebst Antriebsmotor (9) und einem zwischengeschalteten Übersetzungsgetriebe (10) mit mehreren wählbaren Übersetzungsstufen (11) sowie eine Betriebsstellung (16) und eine Wartungsstellung (17) für eine Übersetzungsänderung aufweist,
wobei der Antriebsmotor (9), das Übersetzungsgetriebe (10) und die Sägewelle (7) im Untergestell (3) angeordnet sind **dadurch gekennzeichnet, dass** die Sägewelle (7) durch eine innere aufrechte Wand (21) im Untergestell (3) ragt, dass das Sägeblatt (6) an einer Zugangseite (28) vor der Wand (21) angeordnet ist,
und dass
die Wand (21) mindestens eine Wandöffnung (22,23) aufweist, in der das dahinter befindliche Übersetzungsgetriebe (10) in der Wartungsstellung (17) von der Zugangseite (28) her für eine manuelle Änderung der Übersetzungsstufe (11) zugänglich ist.

2. Tischkreissäge nach Anspruch 1, **dadurch gekennzeichnet, dass** die innere Wand (21) als Wand, insbesondere Rückwand einer starren oder schwenkbaren Sägekonsole (33) oder als innen liegende Gestellwand ausgebildet ist.

3. Tischkreissäge nach Anspruch 1 oder 2, **dadurch gekennzeichnet, dass** die Wandöffnung(en) (22,23) hinter dem Sägeblatt (6) angeordnet ist/sind und bei abgenommenem Sägeblatt (6) von der Zugangseite (28) her zugänglich ist/sind.

4. Tischkreissäge nach Anspruch 1, 2 oder 3, **dadurch gekennzeichnet, dass** das Übersetzungsgetriebe (10) Treibscheibenanordnungen (13,14) mit unterschiedlichen Durchmessern und ein umlaufendes Treibmittel (12), insbesondere einen Riemen, aufweist.

5. Tischkreissäge nach einem der vorhergehenden Ansprüche, **dadurch gekennzeichnet, dass** in der Wartungsstellung (17) die Treibscheibenanordnungen (13,14) und das Treibmittel (12) hinter der/den Wandöffnung(en) (22,23) angeordnet und von der Zugangseite (28) erreichbar sind.

6. Tischkreissäge nach einem der vorhergehenden Ansprüche, **dadurch gekennzeichnet, dass** in der Wartungsstellung (17) die Treibscheibenanordnungen (13,14) einander angenähert sind und das Treibmittel (12) zur Änderung der Übersetzungsstufe (11) auf eine andere Treibscheibenpaarung umlegbar ist.

7. Tischkreissäge nach einem der vorhergehenden Ansprüche, **dadurch gekennzeichnet, dass** die Sägewelle (7) und der Antriebsmotor (9) mit ihren Treibscheibenanordnungen (13,14) ortsveränderlich, insbesondere heb- und senkbar, gelagert sind.

8. Tischkreissäge nach einem der vorhergehenden Ansprüche, **dadurch gekennzeichnet, dass** die Sägewelle (7) und/oder der Antriebsmotor (9) eine Stelleinrichtung (18) zur Bewegung zwischen der Betriebs- und Wartungsstellung (16,17) aufweist.

9. Tischkreissäge nach einem der vorhergehenden Ansprüche, **dadurch gekennzeichnet, dass** die Sägewelle (7) eine Stelleinrichtung (18) aufweist und mit dem frei beweglich gelagerten Antriebsmotor (9) über das Treibmittel (12) gekoppelt ist.

10. Tischkreissäge nach einem der vorhergehenden Ansprüche, **dadurch gekennzeichnet, dass** die Stelleinrichtung (18) als Hubeinrichtung für eine Hub- und Senkbewegung zwischen der oberen Betriebsstellung (16) und der unteren Wartungsstellung (17) ausgebildet ist.

11. Tischkreissäge nach einem der vorhergehenden Ansprüche, **dadurch gekennzeichnet, dass** die Sägewelle (7) und/oder der Antriebsmotor (9) eine manuell oder automatisch betätigbare Arretierung (20) für eine Näherungslage in der Wartungsstellung (17) aufweist.

12. Tischkreissäge nach einem der vorhergehenden Ansprüche, **dadurch gekennzeichnet, dass** an oder unter dem Maschinentisch (2) ein versenkter, sperrbarer und das Sägeblatt (6) bereichsweise umgebender Wartungsbereich (27) angeordnet ist.

13. Tischkreissäge nach einem der vorhergehenden Ansprüche, **dadurch gekennzeichnet, dass** der geöffnete Wartungsbereich (27) von der Zugangseite (28) her zugänglich ist, wobei die Wandöffnung(en) (22,23) am Wartungsbereich (27) mündet/münden.

14. Tischkreissäge nach einem der vorhergehenden Ansprüche, **dadurch gekennzeichnet, dass** der Wartungsbereich (27) unter einem beweglichen Schiebetisch (26) angeordnet ist, welcher den Wartungsbereich (27) nach oben versperrt oder öffnet.

15. Tischkreissäge nach einem der vorhergehenden Ansprüche, **dadurch gekennzeichnet, dass** der Wartungsbereich (27) am oberen Bereich eines Schutzkastens (34) für das Sägeblatt (6) ausgebildet ist, der eine beweglich, insbesondere gelenkig oder abnehmbar, gelagerte oberen Frontabdeckung (36) aufweist.

## Claims

1. Circular saw bench, in particular panel saw, having a saw unit (5) and a machine table (2) which has an underframe (3) with a laterally closed wall (4), wherein the saw unit (5) has a rotating, interchangeable saw blade (6), a saw shaft (7) in addition to a drive motor (9) and an interposed transmission gearing (10) having a number of selectable transmission stages (11) and an operating position (16) and a maintenance position (17) for changing the transmission ratio, wherein the drive motor (9), the transmission gearing (10) and the saw shaft (7) are arranged in the underframe (3), **characterized in that** the saw shaft (7) projects through an inner upright wall (21) in the underframe (3), **in that** the saw blade (6) is arranged on an access side (28) in front of the wall (21), and **in that** the wall (21) has at least one wall opening (22, 23) in which the transmission gearing (10) located therebehind is accessible from the access side (28) in the maintenance position (17) in order to manually change the transmission stage (11).

2. Circular saw bench according to Claim 1, **characterized in that** the inner wall (21) is configured as a wall, in particular rear wall of a rigid or pivotable saw bracket (33) or as an internal frame wall.

3. Circular saw bench according to Claim 1 or 2, **characterized in that** the wall opening(s) (22, 23) is/are arranged behind the saw blade (6) and is/are accessible from the access side (28) with the saw blade (6) removed.

4. Circular saw bench according to Claim 1, 2 or 3, **characterized in that** the transmission gearing (10) has driving sheave arrangements (13, 14) with different diameters, and a circulating driving means (12), in particular a belt.

5. Circular saw bench according to one of the preceding claims, **characterized in that**, in the maintenance position (17), the driving sheave arrangements (13, 14) and the driving means (12) are arranged behind the wall opening(s) (22, 23) and are accessible from the access side (28).

6. Circular saw bench according to one of the preceding claims, **characterized in that**, in the maintenance position (17), the driving sheave arrangements (13, 14) have been brought closer together and the driving means (12) is transferable to another driving sheave pair in order to change the transmission stage (11).

7. Circular saw bench according to one of the preceding claims, **characterized in that** the saw shaft (7) and the drive motor (9) are mounted with their driving sheave arrangements (13, 14) so as to be variable in position, in particular raisable and lowerable.

8. Circular saw bench according to one of the preceding claims, **characterized in that** the saw shaft (7) and/or the drive motor (9) has an adjusting device (18) for moving between the operating position (16) and the maintenance position (17).

9. Circular saw bench according to one of the preceding claims, **characterized in that** the saw shaft (7) has an adjusting device (18) and is coupled to the drive motor (9), which is mounted in a freely movable manner, via the driving means (12).

10. Circular saw bench according to one of the preceding claims, **characterized in that** the adjusting device (18) is configured as a lifting device for carrying out a lifting and lowering movement between the upper operating position (16) and the lower maintenance position (17).

11. Circular saw bench according to one of the preceding claims, **characterized in that** the saw shaft (7) and/or the drive motor (9) has a manually or automatically actuable lock (20) for an approached position in the maintenance position (17).

12. Circular saw bench according to one of the preceding claims, **characterized in that** a lowered and blockable maintenance area (27) that partially surrounds the saw blade (6) is arranged on or under the machine table (2).

13. Circular saw bench according to one of the preceding claims, **characterized in that** the opened maintenance area (27) is accessible from the access side (28), wherein the wall opening(s) (22, 23) open(s) out at the maintenance area (27).

14. Circular saw bench according to one of the preceding claims, **characterized in that** the maintenance area (27) is arranged under a movable sliding table (26) which upwardly closes off or opens the maintenance area (27).

15. Circular saw bench according to one of the preceding claims, **characterized in that** the maintenance area (27) is formed in the upper area of a protective box (34) for the saw blade (6), said protective box (34) having an upper front cover (36) that is mounted in a movable, in particular articulated or removable, manner.

## Revendications

1. Scie circulaire à table, notamment scie circulaire de mise au format, avec un groupe de scie (5) et une table de machine (2) comportant un châssis (3) avec une paroi (4) fermée latérale ;
le groupe de scie (5) comportant une lame de scie (6), changeable pouvant tourner, un arbre de scie (7) ainsi qu'un moteur d'entraînement (9) et un engrenage de démultiplication (10) interconnecté avec plusieurs étages de démultiplication (11) sélectionnables ainsi qu'une position fonctionnelle (16) et une position d'entretien (17) pour modifier la démultiplication ;
le moteur d'entraînement (9), l'engrenage de démultiplication (10) et l'arbre de scie (7) étant disposés dans le châssis (3) ;
**caractérisée en ce que** :
l'arbre de scie (7) ressort dans le châssis (3) à travers une paroi (21) verticale intérieure ;
la lame de scie (6) est disposée devant la paroi (21) au niveau d'un côté d'accès (28) ; et
la paroi (21) comporte au moins une ouverture de paroi (22, 23) dans laquelle l'engrenage de démultiplication (10) se trouvant derrière est accessible dans la position d'entretien (17) depuis le côté d'accès (28) pour un changement manuel de l'étage de démultiplication (11).

2. Scie circulaire à table selon la revendication 1, **caractérisée en ce que** la paroi intérieure (21) prend la forme d'une paroi, notamment de la paroi arrière d'une console de scie (33) rigide ou pouvant pivoter ou la forme d'une paroi de châssis reposant à l'intérieur.

3. Scie circulaire à table selon la revendication 1 ou 2, **caractérisée en ce que** la ou les ouvertures de paroi (22, 23) sont disposées derrière la lame de scie (6) et accessibles depuis le côté d'accès (28) lorsque la lame de scie (6) est retirée.

4. Scie circulaire à table selon la revendication 1, 2 ou 3, **caractérisée en ce que** l'engrenage de démultiplication (10) comporte des agencements à disque d'entraînement (13, 14) avec différents diamètres et un moyen d'entraînement (12) en rotation, notamment une courroie.

5. Scie circulaire à table selon l'une quelconque des revendications précédentes, **caractérisée en ce que** dans la position d'entretien (17), les agencements à disque d'entraînement (13, 14) et le moyen d'entraînement (12) sont disposés derrière la ou les ouvertures de paroi (22, 23) et peuvent être atteints depuis le côté d'accès (28).

6. Scie circulaire à table selon l'une quelconque des revendications précédentes, **caractérisée en ce que** dans la position d'entretien (17), les agencements à disque d'entraînement (13, 14) peuvent être rapprochés les uns des autres et que le moyen d'entraînement (12) peut être placé sur un autre appariement de disque d'entraînement pour modifier l'étage de démultiplication (11).

7. Scie circulaire à table selon l'une quelconque des revendications précédentes, **caractérisée en ce que** l'arbre de scie (7) et le moteur d'entraînement (9) sont disposés de façon à pouvoir être changés de place avec leurs agencements à disque d'entraînement (13, 14), notamment montés et descendus.

8. Scie circulaire à table selon l'une quelconque des revendications précédentes, **caractérisée en ce que** l'arbre de scie (7) et/ou le moteur d'entraînement (9) comporte un dispositif de réglage (18) permettant de se déplacer entre la position fonctionnelle et d'entretien (16, 17) .

9. Scie circulaire à table selon l'une quelconque des revendications précédentes, **caractérisée en ce que** l'arbre de scie (7) comporte un dispositif de réglage (18) et est couplé au moteur d'entraînement (9) disposé de façon librement mobile via le moyen d'entraînement (12).

10. Scie circulaire à table selon l'une quelconque des revendications précédentes, **caractérisée en ce que** le dispositif de réglage (18) prend la forme du dispositif de levée pour un mouvement de montée et descente entre la position fonctionnelle (16) supérieure et la position d'entretien (17) inférieure.

11. Scie circulaire à table selon l'une quelconque des revendications précédentes, **caractérisée en ce que** l'arbre de scie (7) et/ou le moteur d'entraînement (9) comporte un arrêt (20) actionnable manuellement ou automatiquement pour une position d'approche dans la position d'entretien (17).

12. Scie circulaire à table selon l'une quelconque des revendications précédentes, **caractérisée en ce qu'**une zone d'entretien (27) descendue, verrouillable et entourant partiellement la lame de scie (6) est disposée au niveau de la table de machine (2) ou sous elle.

13. Scie circulaire à table selon l'une quelconque des revendications précédentes, **caractérisée en ce que** la zone d'entretien (27) ouverte est accessible depuis le côté d'accès (28), la ou les ouvertures de paroi (22, 23) débouchant au niveau de la zone d'entretien (27).

14. Scie circulaire à table selon l'une quelconque des revendications précédentes, **caractérisée en ce que** la zone d'entretien (27) est disposée sous une table coulissante (26) mobile bloquant ou ouvrant la zone d'entretien (27) vers le haut.

15. Scie circulaire à table selon l'une quelconque des revendications précédentes, **caractérisée en ce que** la zone d'entretien (27) est réalisée au niveau d'une zone supérieure d'un caisson de protection (34) prévue pour la lame de scie (6), ledit caisson comportant un cache avant (36) supérieur disposé de façon mobile, notamment de façon articulée ou retirable.
